# EUROPEAN PATENT SPECIFICATION

(11) **EP 3 358 790 B1**
(45) Date of publication and mention of the grant of the patent: **18.03.2020**
(21) Application number: 15905041.8
(22) Date of filing: 29.09.2015
(51) Int. Cl.: H04L 12/24, G06F 9/455, H04L 12/46

(54) **NETWORK FUNCTION VIRTUALIZATION RESOURCE PROCESSING METHOD AND VIRTUALIZED NETWORK FUNCTION MANAGER**
VERFAHREN ZUR VERARBEITUNG VON NETZWERKFUNKTIONVIRTUALISIERUNGSRESSOURCEN UND MANAGER FÜR VIRTUALISIERTE NETZWERKFUNKTION
PROCÉDÉ DE TRAITEMENT DE RESSOURCE DE VIRTUALISATION DE FONCTION DE RÉSEAU ET GESTIONNAIRE DE FONCTION DE RÉSEAU VIRTUALISÉE

(43) Date of publication of application: 08.08.2018
(73) Proprietor: Huawei Technologies Co., Ltd., Longgang District Shenzhen, Guangdong 518129 (CN)
(72) Inventor: JI, Li, Shenzen Guangdong 518129 (CN); XU, Ruiyue, Shenzen Guangdong 518129 (CN)
(74) Representative: Gill Jennings & Every LLP
(86) International application number: PCT/CN2015/091066
(87) International publication number: WO 2017/054129

(56) References cited:
- WO-A1-2015/099035
- CN-A- 104 219 127
- CN-A- 104 579 732
- US-A1- 2014 201 374
- US-A1- 2015 180 730
- "Network Function Virtualization (NFV) Management and Orchestration;NFV-MAN001v044-clean", ETSI DRAFT; NFV-MAN001V044-CLEAN, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, no. V0.4.4, 9 May 2014 (2014-05-09), pages 1-178, XP014182223, [retrieved on 2014-05-09]

## Description

### TECHNICAL FIELD

The present disclosure relates to the network functions virtualization field, and in particular, to a network functions virtualization resource processing method and a virtualized network function manager.

### BACKGROUND

With the development of cloud technologies, as a basic technology of cloud computing, a virtualization technology has been widely used in enterprise data centers and the large-scale cluster computing field. According to a network functions virtualization (English: Network Functions Virtualization, NFV for short) technology, many types of network devices can be combined in an industry standard by using a virtualization technology of an information technology (English: Information Technology, IT for short). For example, services, switching, and storage may be deployed in a data center or a network node. Various network functions are implemented in a form of software. The various network functions can run on an industry standard server, and can further be migrated, instantiated, redeployed, or the like as required, to generate a virtualized network function (English: Virtualized Network Function, VNF for short) without a need for installation of a new device. A network service (English: Network Service, NS for short) may be implemented between multiple virtualized network functions. In an NFV network architecture, one NFV orchestrator (English: NFV Orchestrator, NFVO for short) may manage multiple virtualized network function managers (English: VNF Manager, VNFM for short), one VNFM may manage multiple VNFs, and the NFVO controls management and allocation of multiple VIM resources.

It is found that both resource allocation and resource management need to be performed by using the NFVO in the prior art, and relatively serious network impact may be caused when the NFVO encounters a single point of failure.

"Network Function Virtualisation (NFV) Management and Orchestration; European Telecommunications Standards Institute, May 2014, pages 1-178, discloses methods and systems for network function virtualisation control.

### SUMMARY

Aspects of the present disclosure provide a network functions virtualization resource processing method and a virtualized network function manager, to improve robustness and efficiency of a network during resource allocation management.

Aspects of the disclosure are defined in the attached claims.

The present disclosure provides a network functions virtualization resource processing method and a virtualized network function manager. When determining that the first VNFM needs to apply for a resource for the virtualized network function VNF, the first VNFM sends, without using an NFVO, the first resource request message for requesting a resource to the second VNFM connected to the first VNFM. The first resource request message includes the information about the resource for which the first VNFM applies for the VNF. When the resource of the target VIM connected to the second VNFM meets the information about the resource that is applied for, the first VNFM determines, according to the received first feedback message, the information about the target VIM that can reserve a resource for or allocate a resource to the first VNFM. It can be learned that a distributed resource management manner is implemented in a resource processing process described in the aspects. Therefore, when the NFVO is faulty, the first VNFM can still apply for a resource for the virtualized network function VNF, thereby effectively improving robustness and efficiency of a network.

### BRIEF DESCRIPTION OF DRAWINGS

FIG. 1 is a schematic architectural diagram of an NFV system according to an aspect of the present disclosure;
FIG. 2 is a local schematic structural diagram of an NFV system according to an aspect of the present disclosure;
FIG. 3 is a step flowchart of a network functions virtualization resource processing method according to Aspect 1 of the present disclosure;
FIG. 4 is a step flowchart of a network functions virtualization resource processing method according to Aspect 2 of the present disclosure;
FIG. 5A and FIG. 5B are a step flowchart of a network functions virtualization resource processing method according to Aspect 3 of the present disclosure;
FIG. 6 is a step flowchart of a network functions virtualization resource processing method according to Aspect 4 of the present disclosure;
FIG. 7A and FIG. 7B are a step flowchart of a network functions virtualization resource processing method according to Aspect 5 of the present disclosure;
FIG. 8 is a schematic structural diagram of a virtualized network function manager VNFM according to Aspect 6 of the present disclosure;
FIG. 9 is a schematic structural diagram of a virtualized network function manager VNFM according to Aspect 7 of the present disclosure;
FIG. 10 is a schematic structural diagram of a virtualized network function manager VNFM according to Aspect 8 of the present disclosure; and
FIG. 11 is a schematic structural diagram of a virtualized network function manager VNFM according to Aspect 9 of the present disclosure.

### DESCRIPTION OF ASPECTS

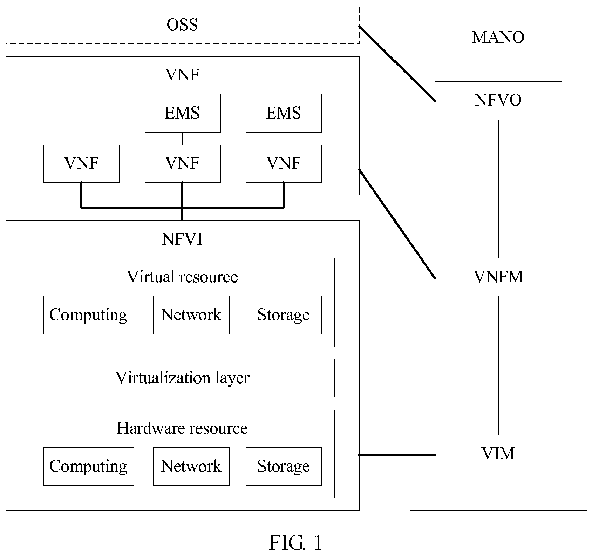

FIG. 1 is an architectural diagram of an NFV system in the prior art. Referring to FIG. 1, an NFV end-to-end architecture defined in an existing standard mainly includes three parts: a virtualized network function (Virtualized Network Function, VNF), an NFV infrastructure (NFV infrastructure, NFVI), and management and orchestration (Management and Orchestration, MANO).

The VNF means the virtualized network function, and corresponds to a physical network function on a conventional network.

The NFVI provides hardware and a virtual resource for operation of the entire system, and includes a hardware resource (including three parts: computing, a network, and storage), a virtualization layer (which virtualizes the hardware resource into a resource pool), and the virtual resource (also including three parts: computing, a network, and storage).

The MANO includes: an NFV orchestrator (NFV Orchestrator, NFVO), a VNF manager (VNF Manager, VNFM), and a virtualized infrastructure manager (Virtualized infrastructure manager, VIM).

The NFVO is responsible for lifecycle management of a network service (Network Service, NS, a service unit including multiple VNFs), and management and orchestration of resources (including the hardware resource and a software resource) of the entire NFV system.

The VNFM is responsible for lifecycle management of the VNF.

The VIM is responsible for managing the NFVI.

The VNF is equipped with an element management system (Element Management System, EMS) to manage the VNF.

In addition, an operation support system (Operation Support System, OSS) may manage the entire NFV system by using the NFVO.

For better understanding of the aspects of the present disclosure, on a basis of FIG. 1, a network functions virtualization NFV system is first described in the aspects of the present disclosure.

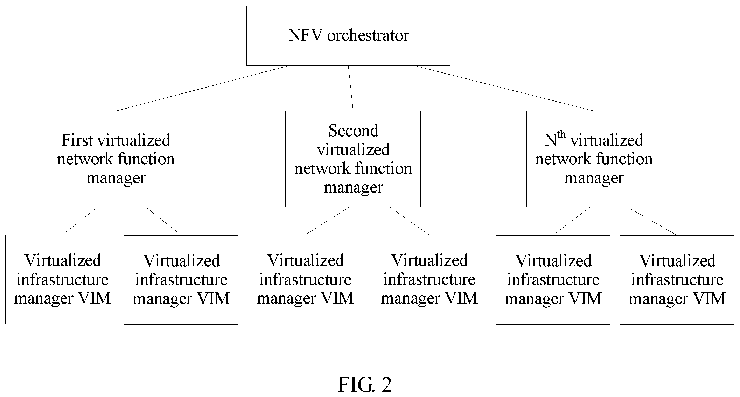

FIG. 2 is a local schematic structural diagram of an NFV system that can implement a network functions virtualization resource processing method according to an aspect of the present disclosure.

It should be noted that FIG. 2 is a schematic architectural diagram of the NFV system according to the aspect of the present disclosure, but does not impose limitations.

In an example in FIG. 2, the NFV system includes:
an NFV orchestrator and multiple VNFMs connected to the NFV orchestrator.

For a detailed description of the NFV orchestrator and the VNFMs, refer to descriptions of FIG. 1. Details are not described again in this aspect.

It should be noted that a quantity of VNFMs included in a management domain of the NFV orchestrator is not limited in this aspect.

Optionally, all the VNFMs in the management domain of the NFV orchestrator are connected to the NFVO.

In this aspect, a first VNFM is connected to a second VNFM, so that a message can be transmitted between the first VNFM and the second VNFM.

Optionally, the first VNFM and the second VNFM are connected by using an interface.

In this aspect, the first VNFM not only may be connected to the second VNFM, but the first VNFM may also be connected to an Nth VNFM. A specific value of N is not limited in this aspect.

A management domain of each VNFM includes multiple virtualized infrastructure managers VIMs.

A specific quantity of VIMs included in the management domain of each VNFM is not limited in this aspect.

In an example in FIG. 2, two VIMs are set to be connected to the first VNFM, and two VIMs are set to be connected to the second VNFM.

The VIM described in this aspect can allocate or reserve, according to an instruction of the VNFM, a resource that is applied for for a virtualized network function VNF.

The following describes in detail the network functions virtualization resource processing method provided in the present disclosure with reference to specific aspects.

### Aspect 1

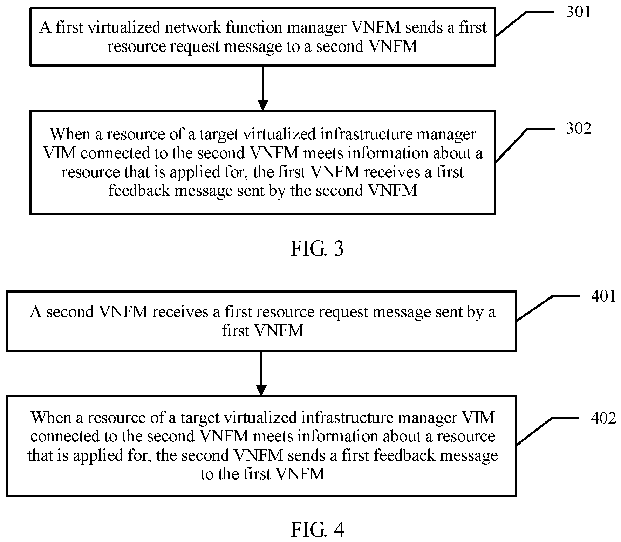

The following describes in detail Aspect 1 with reference to FIG. 3. FIG. 3 is a step flowchart of a network functions virtualization resource processing method according to Aspect 1 of the present disclosure.

301. A first virtualized network function manager VNFM sends a first resource request message to a second VNFM.

In this aspect, the first VNFM is already connected to the second VNFM, so that the first VNFM can send the first resource request message to the second VNFM.

It should be noted that a description is provided in this aspect by using an example in which the first VNFM and the second VNFM that are connected to each other are located in a management domain of one NFVO. No limitation is imposed thereon.

In another optional application scenario, alternatively, the first VNFM and the second VNFM that are connected to each other may be located in management domains of two different NFVOs, provided that the first VNFM can send the first resource request message to the second VNFM.

This aspect sets no limitation on the first resource request message, provided that the first resource request message includes information about a resource for which the first VNFM applies for a virtualized network function VNF.

In this aspect, the first VNFM notifies the second VNFM by using the first resource request message, and the first resource request message includes the information about the resource for which the first VNFM applies for the VNF.

This aspect sets no limitation on specific content of the information about the resource for which the first VNFM applies for the VNF, provided that the second VNFM determines, according to the information about the resource that is applied for, whether a virtualized infrastructure manager VIM connected to the second VNFM can allocate the resource for which the first VNFM applies for the VNF.

302. When a resource of a target virtualized infrastructure manager VIM connected to the second VNFM meets information about a resource that is applied for, the first VNFM receives a first feedback message sent by the second VNFM.

In this aspect, when the resource of the target VIM meets the information about the resource for which the first VNFM applies for the VNF, the first VNFM can determine, according to the first feedback message sent by the second VNFM, information about the target VIM that has reserved a resource for or allocated a resource to the first VNFM.

This aspect sets no limitation on the first feedback message, provided that the first VNFM can determine, according to the first feedback message, the information about the target VIM that has reserved a resource for or allocated a resource to the first VNFM.

According to the network functions virtualization resource processing method described in this aspect, when the first VNFM determines that resource allocation needs to be performed, the first VNFM sends the first resource request message to the second VNFM. When the resource of the target VIM connected to the second VNFM meets the information about the resource that is applied for, the first VNFM determines, according to the received first feedback message, the information about the target VIM that can reserve or allocate the resource that is applied for. It can be learned that, in a resource processing process in this aspect, a resource management network is formed between the first VNFM and the second VNFM, so that the VNFMs can perform resource processing such as resource query or resource allocation between each other. This process does not require participation of an NFVO. Therefore, impact on the network if the NFVO is faulty is avoided, and a distributed resource management manner is implemented, effectively improving robustness and efficiency of the network.

Aspect 1 shown in FIG. 3 describes the network functions virtualization resource processing method from an angle of the first VNFM. The following describes the network functions virtualization resource processing method from an angle of the second VNFM with reference to Aspect 2 shown in FIG. 4.

### Aspect 2

401. A second VNFM receives a first resource request message sent by a first VNFM.

The first resource request message includes information about a resource for which the first VNFM applies for a virtualized network function VNF.

The second VNFM in this aspect is a VNFM that is connected to the first VNFM and that can send/receive a message to/from the first VNFM. The second VNFM and the first VNFM may be located in a management domain of a same NFVO, or may be located in management domains of different NFVOs. This aspect sets no specific limitation.

This aspect sets no limitation on the first resource request message, provided that the second VNFM can determine, after receiving the first resource request message, whether a VIM connected to the second VNFM can allocate a resource that is applied for.

402. When a resource of a target virtualized infrastructure manager VIM connected to the second VNFM meets information about a resource that is applied for, the second VNFM sends a first feedback message to the first VNFM.

In this aspect, when the second VNFM determines that a resource of a target VIM connected to the second VNFM meets the information about the resource that is applied for, the second VNFM sends the first feedback message to the first VNFM.

The first feedback message includes information about the target VIM that has reserved a resource for or allocated a resource to the first VNFM.

According to the network functions virtualization resource processing method described in this aspect, the second VNFM can receive, without using an NFVO, the first resource request message sent by the first VNFM. When the resource of the target VIM connected to the second VNFM meets the information about the resource for which the first VNFM applies for the VNF, the second VNFM sends the first feedback message to the first VNFM. The first VNFM can determine, according to the received first feedback message, the information about the target VIM that has reserved a resource for or allocated a resource to the first VNFM. It can be learned that a resource management network is formed between the first VNFM and the second VNFM in a resource processing process in this aspect, so that the VNFMs can perform resource processing such as resource query or resource allocation between each other. A specific processing process does not require participation of the NFVO. Therefore, impact on the network if the NFVO is faulty is avoided, and a distributed resource management manner is implemented. Further, when the NFVO is faulty, the second VNFM can still reserve or allocate the resource that is applied for, effectively improving robustness and efficiency of the network.

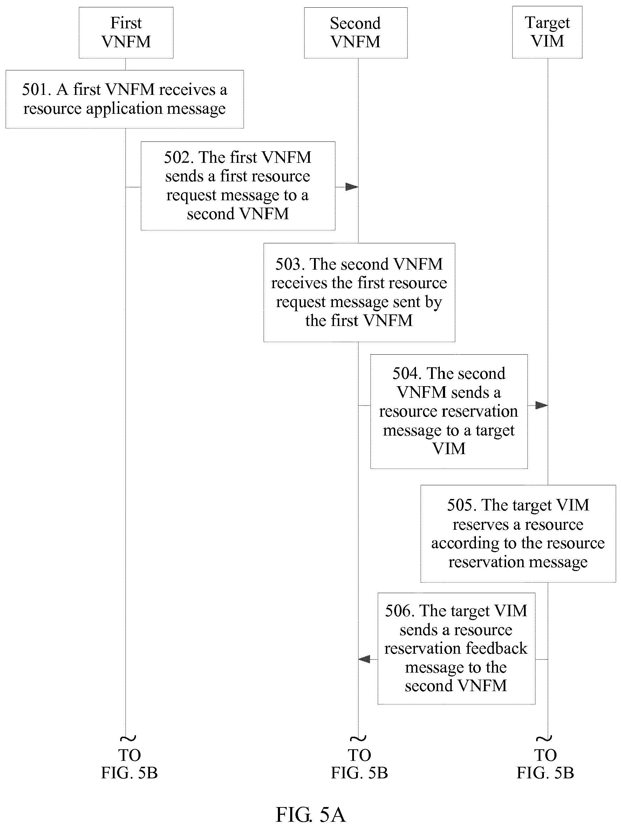

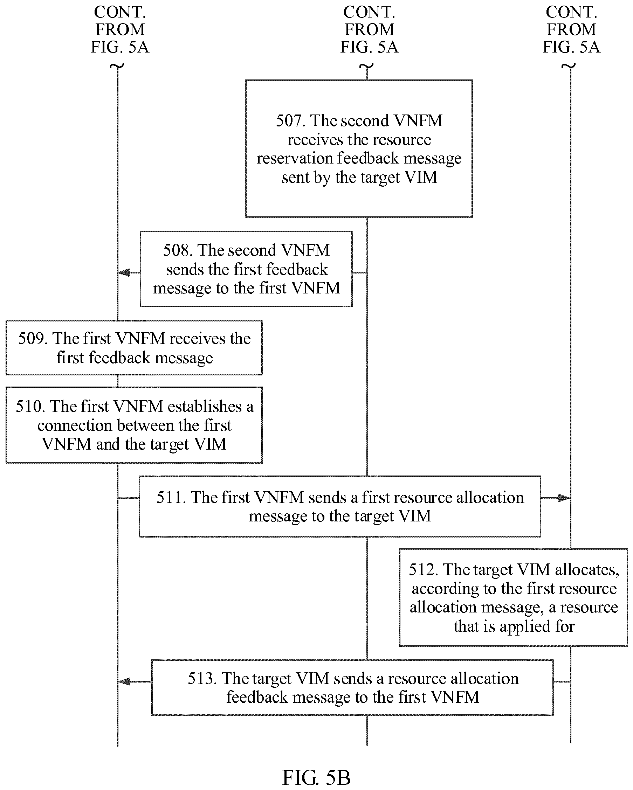

On a basis of Aspect 1 and Aspect 2, with reference to Aspect 3 shown in FIG. 5A and FIG. 5B, the following describes how the first VNFM and the second VNFM implement distributed resource management.

### Aspect 3

501. A first VNFM receives a resource application message.

In this step, no limitation is set on the resource application message, provided that the first VNFM determines, according to the resource application message, that there is a functional entity applying to the first VNFM for a resource.

For example, the resource application message may be an instantiation request of a VNF, an expansion request of a VNF, or any request related to resource application.

The expansion request of a VNF is a request that is sent by the VNF by using the resource application message and that is used for applying to the first VNFM for resource increase for the VNF when a load of the VNF exceeds a specific threshold or when resource consumption (for example, CPU usage) exceeds a specific threshold.

This aspect sets no limitation on a functional entity that sends the resource application message. For example, the functional entity that sends the resource application message may be a VNF, an element manager (English: element manager, EM for short) entity, or another functional entity that can initiate a related resource application operation.

Specifically, the first VNFM can determine, according to the resource application message, the resource that is applied for.

Optionally, the resource that is applied for includes a resource amount of the resource that is applied for and a resource type of the resource that is applied for.

502. The first VNFM sends a first resource request message to a second VNFM.

Optionally, in this aspect, the first VNFM sends the first resource request message according to resource information of a remaining resource of a VIM connected to the first VNFM.

Specifically, the first VNFM may check the resource information of the remaining resource of the VIM connected to the first VNFM. The resource information of the remaining resource described in this aspect may include a resource amount of the remaining resource and a resource type of the remaining resource.

The resource type of the remaining resource determined by the first VNFM matches a resource type of the resource that is applied for.

The VIM that is connected to the first VNFM and that is described in this aspect may be a VIM that has a resource information exchange (such as query, update, management, reservation, or allocation) relationship with the first VNFM.

Optionally, the first VNFM may be physically connected to the VIM, but no resource management relationship is triggered.

This aspect sets no limitation on how the first VNFM specifically checks the resource information of the remaining resource of the VIM connected to the first VNFM, provided that the first VNFM can determine the resource information of the remaining resource of the VIM connected to the first VNFM.

The following describes an example of a manner in which the first VNFM determines the resource information of the remaining resource of the VIM connected to the first VNFM.

This aspect provides two manners in which the first VNFM determines the resource information of the remaining resource.

In a first manner, the first VNFM stores a resource list.

The resource list stores resource information of a remaining resource of a VIM that has a resource management relationship with the first VNFM. When the first VNFM needs to determine the resource information of the remaining resource, the first VNFM directly queries the resource list.

Specifically, the resource information of the remaining resource that is stored in the resource list may be obtained by the first VNFM from the VIM. Alternatively, the VIM connected to the first VNFM periodically or aperiodically reports the resource information of the remaining resource to the first VNFM. Alternatively, the VIM that is connected to the first VNFM reports the resource information of the remaining resource of the VIM to the first VNFM when a trigger event is met, and the trigger event may be an event that a resource managed by the VIM connected to the first VNFM changes.

In a second manner, after the first VNFM receives the resource application message, the first VNFM may send a resource query message to the VIM connected to the first VNFM, so that the VIM connected to the first VNFM sends a resource response message, and indicates the resource information of the remaining resource of the VIM by using the resource response message.

It should be noted that some VNFs may allocate resources across VIMs. In this case, only a total of remaining resources of all VIMs managed by the first VNFM needs to meet a requirement. However, some VNFs cannot allocate resources across VIMs. In this case, if a remaining resource of each VIM managed by the first VNFM cannot meet the requirement, the first resource request message needs to be sent.

It can be learned that if the first VNFM determines that the resource amount of the remaining resource of the VIM connected to the first VNFM is less than the resource amount of the resource that is applied for, the first VNFM sends the first resource request message, so that the first VNFM can request, by using the first resource request message, a resource from another VNFM connected to the first VNFM.

For example, the first VNFM determines to apply for a resource of 4 GB vRAM, 2 vCPU, and 32 GB virtual storage. However, the first VNFM determines the remaining resource of the VIM connected to the first VNFM is 2 GB vRAM, 1 vCPU, and 28 GB virtual storage. The first VNFM may determine that the VIM connected to the first VNFM cannot allocate the resource that is applied for, and the first VNFM may send the first resource request message.

It should be noted that step 501 and step 502 in this aspect are optional steps. Limitation is not imposed thereon.

For example, alternatively, the first VNFM may send the first resource request message without querying the resource information of the remaining resource of the VIM connected to the first VNFM.

For another example, alternatively, the first VNFM may send the first resource request message when no resource application message is received and the resource information of the remaining resource of the VIM connected to the first VNFM cannot meet a preconfigured resource management threshold. The resource management threshold herein may be defined as a specific amount that a resource managed by a VNFM needs to meet. For example, the resource management threshold may be 10 GB vRAM, 8 vCPU, and 65 GB virtual storage.

The first resource request message includes information about a resource for which the first VNFM applies for the VNF.

The resource that is applied for described in this aspect is a resource that the first VNFM requests a VIM connected to the second VNFM to allocate.

In this aspect, the resource for which the first VNFM applies for the VNF may be all resources that are applied for. Alternatively, the resource for which the first VNFM applies for the VNF may be some of resources that are applied for.

If the resource for which the first VNFM applies for the VNF is all the resources that are applied for, the first VNFM can request, by using the first resource request message, the resource from the another VNFM connected to the first VNFM.

If the resource for which the first VNFM applies for the VNF is some of the resources that are applied for, the first VNFM may divide the resource that is applied for into two parts: a first resource that is applied for and a second resource that is applied for. The first resource that is applied for matches the remaining resource of the VIM connected to the first VNFM; and the first VNFM may allocate, by using the VIM connected to the first VNFM, the first resource that is applied for. In this case, the resource for which the first VNFM applies for the VNF is the second resource that is applied for. That is, the first VNFM may request, by using the first resource request message, the VIM connected to the second VNFM, to allocate the second resource that is applied for.

Specifically, the information about the resource for which the first VNFM applies for the VNF includes a resource type and a resource amount of the resource that is applied for for the VNF.

More specifically, the first resource request message may further carry the following information: a related policy of the resource that is applied for, for example, affinity/anti-affinity (affinity/anti-affinity).

503. The second VNFM receives the first resource request message sent by the first VNFM. 504. The second VNFM sends a resource reservation message to a target VIM.

Specifically, the second VNFM determines a target VIM. A process in which the second VNFM determines the target VIM may be as follows:
After receiving the first resource request message, the second VNFM may query resource information of a remaining resource of the VIM connected to the second VNFM. The second VNFM determines that a VIM that is of the VIM connected to the second VNFM and that can allocate the resource that is applied for is the target VIM.

For example, a remaining resource of a VIM 4 connected to the second VNFM can be used to allocate the resource that is applied for, and the second VNFM may determine the VIM 4 as the target VIM.

This aspect sets no limitation on the resource reservation message, provided that the resource reservation message can instruct the target VIM to reserve a resource for the resource that is applied for.

Specifically, the resource reservation message includes a resource reservation identifier, and the resource reservation identifier is used to identify the resource reserved by the target VIM, and allocate the resource that is applied for.

Optionally, the resource reservation message includes any combination of the following information: the resource reservation identifier, an identifier of the first VNFM, an identifier of the VNF to which a resource needs to be allocated, the type of the resource that is applied for, the amount of the resource that is applied for, the related policy of the resource that is applied for, and an identifier of the target VIM.

505. The target VIM reserves a resource according to the resource reservation message.

506. The target VIM sends a resource reservation feedback message to the second VNFM.

507. The second VNFM receives the resource reservation feedback message sent by the target VIM.

The second VNFM can determine, according to the resource reservation feedback message, that the target VIM has successfully reserved the resource.

When the target VIM has successfully reserved the resource, the second VNFM sends the first feedback message.

Specifically, information about the target VIM that is included in the first feedback message includes any combination of the following information: the identifier of the target VIM, and configuration information for establishing a connection to the target VIM.

It should be noted that the specific information included in the information about the target VIM is an example for description instead of a limitation, provided that the first VNFM can determine, according to the first feedback message, that the target VIM has successfully reserved the resource.

For example, the information about the target VIM may further include information about the resource reserved on the VIM, for example, a type of the resource and a corresponding resource amount.

More specifically, the first feedback message includes the resource reservation identifier.

508. The second VNFM sends the first feedback message to the first VNFM.

509. The first VNFM receives the first feedback message.

510. The first VNFM establishes a connection between the first VNFM and the target VIM.

Specifically, the first VNFM may establish the connection to the target VIM according to the first feedback message. More specifically, the first VNFM may establish the connection to the target VIM according to the information about the target VIM that is included in the first feedback message.

Certainly, in a specific application process of this aspect, the identifier of the target VIM and/or the configuration information may be sent to the first VNFM by the second VNFM without using the first feedback message.

It should be noted that there is no time sequence relationship between step 510 for establishing the connection between the first VNFM and the target VIM and step 504 to step 509. This aspect is merely an example.

It should be further noted that if the first VNFM is already connected to the target VIM, step 510 does not need to be performed.

It should be further noted that step 510 for establishing the connection between the first VNFM and the target VIM is merely an example instead of a limitation. For example, alternatively, the first VNFM may further obtain configuration information from an NFVO connected to the first VNFM.

This aspect sets no limitation on the configuration information, provided that the first VNFM can establish the connection between the first VNFM and the target VIM according to the configuration information.

For example, the configuration information includes an IP address of the target VIM.

Optionally, the configuration information may further include any combination of the following information: a uniform resource locator (English: uniform resource locator, URL for short) of the target VIM, a user name of the target VIM, an authentication password of the target VIM, and the like.

511. The first VNFM sends a first resource allocation message to the target VIM.

The first resource allocation message is used by the target VIM to allocate, according to the first resource allocation message, the resource that is applied for.

Specifically, the first resource allocation message includes the resource reservation identifier.

512. The target VIM allocates, according to the first resource allocation message, a resource that is applied for.

For example, the VIM performs resource allocation according to information about a previously reserved resource, including starting a virtual machine (VM, virtual machine).

513. The target VIM sends a resource allocation feedback message to the first VNFM.

Specifically, after receiving the first resource allocation message, the target VIM may determine, according to the resource reservation identifier included in the first resource allocation message, that the reserved resource is used to allocate the resource that is applied for.

The target VIM can allocate, by using the reserved resource, the resource that is applied for.

The target VIM may notify, by using the resource allocation feedback message, the first VNFM that the resource that is applied for has been successfully allocated.

Optionally, the first VNFM may further feed back a resource allocation status to the NFVO connected to the first VNFM.

Optionally, after the first VNFM receives the resource allocation feedback message sent by the target VIM, the first VNFM may further perform a related configuration operation on a related VNF. For example, if the resource application message is a VNF instantiation request, the first VNFM performs parameter configuration on the VNF; or if the resource application message is a VNF expansion request, the first VNFM updates parameter configuration of the VNF.

According to the network functions virtualization resource processing method described in this aspect, a resource management network is formed between the first VNFM and the second VNFM, so that the VNFMs can perform resource processing such as resource query or resource allocation between each other. A specific processing process does not require participation of the NFVO. Therefore, impact on the network if the NFVO is faulty is avoided, and a distributed resource management manner is implemented. Further, when the NFVO is faulty, the second VNFM can still reserve or allocate the resource that is applied for, effectively improving robustness and efficiency of the network.

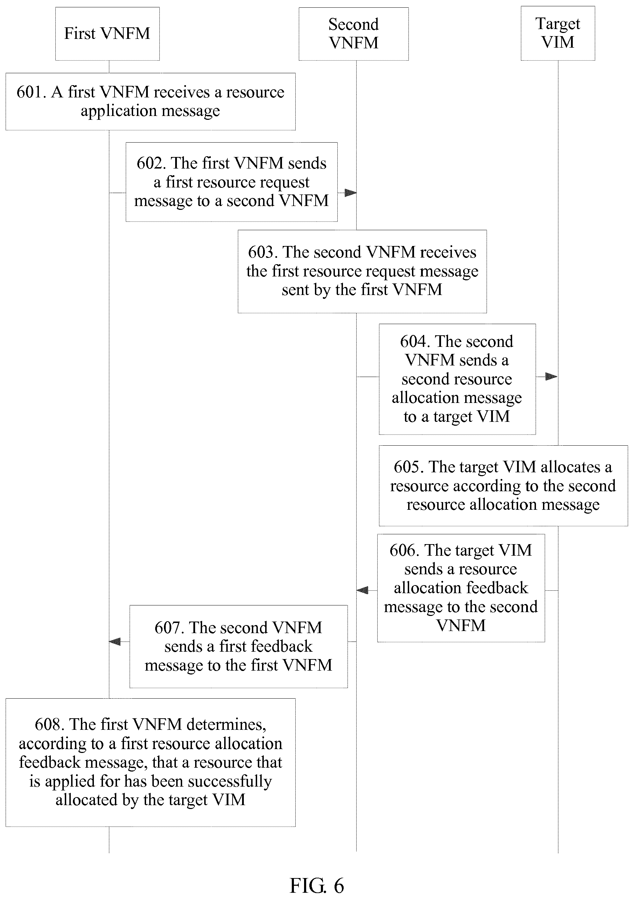

FIG. 5A and FIG. 5B show Aspect 3 in which the second VNFM performs resource reservation on the resource for which the first VNFM applies for the VNF, and the first VNFM performs resource allocation on the resource that is applied for. With reference to Aspect 4 shown in FIG. 6, the following describes how the second VNFM implements resource allocation on the resource that is applied for.

### Aspect 4

601. A first VNFM receives a resource application message.

602. The first VNFM sends a first resource request message to a second VNFM.

603. The second VNFM receives the first resource request message sent by the first VNFM.

For details about specific processes of step 601 to step 603 described in this aspect, refer to the descriptions of step 501 to step 503 shown in FIG. 5A and FIG. 5B. Details are not described again in this aspect.

604. The second VNFM sends a second resource allocation message to a target VIM.

For details about a specific process of how the second VNFM determines the target VIM, refer to the aspect shown in FIG. 4. Details are not described again in this aspect.

In this aspect, the second resource allocation message may include any combination of the following information: a type of a resource that is applied for, an amount of the resource that is applied for, and a related policy of the resource that is applied for.

605. The target VIM allocates a resource according to the second resource allocation message.

606. The target VIM sends a resource allocation feedback message to the second VNFM.

The target VIM may notify, by using the resource allocation feedback message, the second VNFM that the resource that is applied for has been successfully allocated. Optionally, the resource allocation feedback message may include an identifier of the target VIM and some configuration parameters such as a location of the allocated resource and connection information.

607. The second VNFM sends a first feedback message to the first VNFM.

The first feedback message includes information about the target VIM that has allocated a resource to the first VNFM, for example, the identifier of the target VIM, and information about the resource allocated by the target VIM. The information about the allocated resource includes a type of the allocated resource and an amount of the allocated resource.

The first feedback message may further include any combination of the following information: an identifier of a target virtual machine VM allocated by the target VIM, and location information of the target VM.

608. The first VNFM determines, according to a first resource allocation feedback message, that a resource that is applied for has been successfully allocated by the target VIM.

Optionally, the first VNFM may further feed back a resource allocation status to an NFVO connected to the first VNFM.

Optionally, after the first VNFM receives the resource allocation feedback message sent by the target VIM, the first VNFM may further perform a related configuration operation on a related VNF. For example, if the resource application message is a VNF instantiation request, the first VNFM performs parameter configuration on the VNF; or if the resource application message is a VNF expansion request, the first VNFM updates parameter configuration of the VNF.

According to the network functions virtualization resource processing method described in this aspect, a resource management network is formed between the first VNFM and the second VNFM, so that the VNFMs can perform resource processing such as resource query or resource allocation between each other. A specific processing process does not require participation of the NFVO. Therefore, impact on the network if the NFVO is faulty is avoided, and a distributed resource management manner is implemented. Further, when the NFVO is faulty, the second VNFM can still reserve or allocate the resource that is applied for, effectively improving robustness and efficiency of the network.

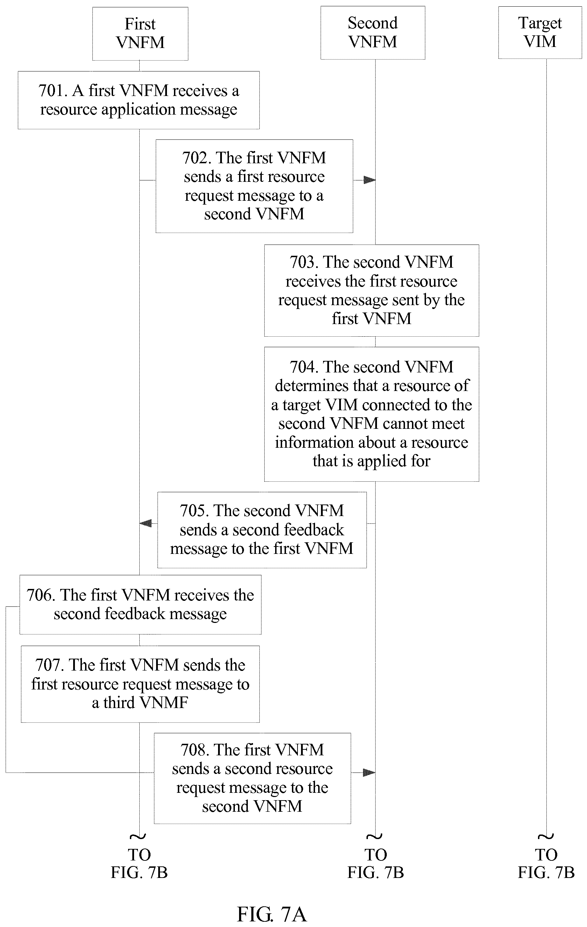

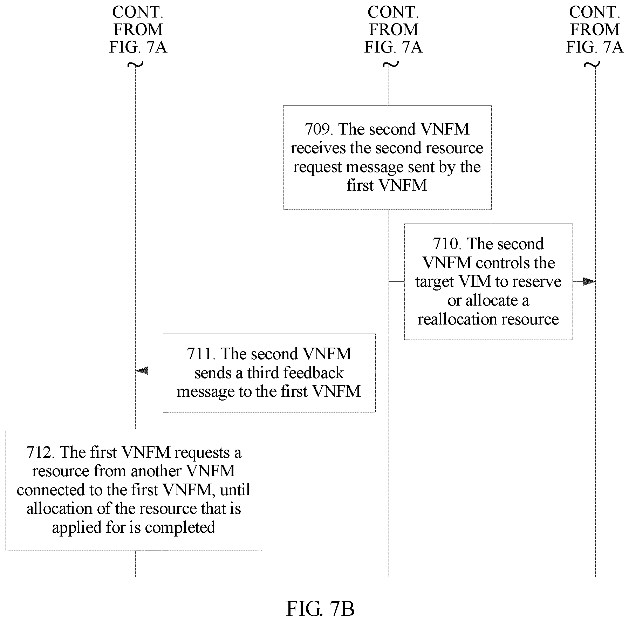

Aspect 3 shown in FIG. 5A and FIG. 5B and Aspect 4 shown in FIG. 6 describe how the network functions virtualization resource processing method is implemented when the resource of the target VIM connected to the second VNFM meets information about the resource that is applied for. With reference to Aspect 5 shown in FIG. 7A and FIG. 7B, the following describes how to implement the network functions virtualization resource processing method if the resource of the target VIM connected to the second VNFM cannot meet the information about the resource that is applied for.

### Aspect 5

701. A first VNFM receives a resource application message.

702. The first VNFM sends a first resource request message to a second VNFM.

703. The second VNFM receives the first resource request message sent by the first VNFM.

For specific processes of step 701 to step 703 described in this aspect, refer to the descriptions of step 501 to step 503 shown in FIG. 5A. Details are not described again in this aspect.

704. The second VNFM determines that a resource of a target VIM connected to the second VNFM cannot meet information about a resource that is applied for.

Specifically, after receiving the first resource request message, the second VNFM may query resource information of a remaining resource of the target VIM connected to the second VNFM.

In this aspect, the target VIM connected to the second VNFM cannot allocate the resource that is applied for.

For example, a resource amount of the remaining resource of the target VIM is less than an amount of the resource that is applied for.

705. The second VNFM sends a second feedback message to the first VNFM.

The second feedback message is used to indicate that the resource of the target VIM connected to the second VNFM cannot meet the information about the resource that is applied for.

Specifically, the second feedback message further includes the resource information of the remaining resource of the target VIM connected to the second VNFM.

The resource information of the remaining resource of the target VIM includes a resource type of the remaining resource and a resource amount of the remaining resource.

706. The first VNFM receives the second feedback message.

If the first VNFM determines, according to the second feedback message, that the resource of the target VIM connected to the second VNFM cannot meet the information about the resource that is applied for, the first VNFM may continue to perform step 707 or step 708.

By performing step 707, the first VNFM sends the first resource request message to a third VNFM connected to the first VNFM. If a resource of a VIM connected to the third VNFM cannot meet the information about the resource that is applied for, the first VNFM sends a first request message to another VNFM connected to the first VNFM, until the first resource request message is sent to a VNFM that meets the information about the resource that is applied for.

If the resource of the VIM connected to the third VNFM can meet the information about the resource that is applied for, the first VNFM requests the VIM connected to the third VNFM to reserve or allocate the resource that is applied for.

Optionally, the first VNFM may send the first resource request message to all VNFMs connected to the first VNFM, to select a VNFM that meets the information about the resource that is applied for.

Specifically, for a specific implementation process in which the VIM connected to the third VNFM reserves or allocates the resource that is applied for, refer to the foregoing-described process in which the target VIM connected to the second VNFM reserves or allocates the resource that is applied for. Details are not described herein again. By performing step 708, the first VNFM can trigger the target VIM connected to the second VNFM to reserve or allocate a part of the resource that is applied for. For details, refer to descriptions of step 708 to step 712.

707. The first VNFM sends the first resource request message to a third VNFM.

708. The first VNFM sends a second resource request message to the second VNFM.

The second resource request message includes resource information of a reallocation resource.

The reallocation resource is a resource that is in the resource that is applied for and that matches the remaining resource.

Specifically, a resource amount of the reallocation resource is less than or equal to the resource amount of the remaining resource.

More specifically, the resource information of the reallocation resource includes a resource type of the reallocation resource and the resource amount of the reallocation resource.

709. The second VNFM receives the second resource request message sent by the first VNFM.

710. The second VNFM controls the target VIM to reserve or allocate a reallocation resource.

Specifically, the second VNFM reserves or allocates the reallocation resource according to the second resource request message.

If the second VNFM reserves the to-be-reallocated resource, for an implementation process in which the second VNFM reserves the to-be-reallocated resource, refer to the process shown in FIG. 4 in which the second VNFM reserves the resource that is applied for. Details are not described again in this aspect.

If the second VNFM allocates the to-be-reallocated resource, for an implementation process in which the second VNFM allocates the to-be-reallocated resource, refer to the process shown in FIG. 5A and FIG. 5B in which the second VNFM allocates the resource that is applied for. Details are not described again in this aspect.

711. The second VNFM sends a third feedback message to the first VNFM.

The third feedback message includes information about a VIM that has reserved or allocated a resource for the reallocation resource.

712. The first VNFM requests a resource from another VNFM connected to the first VNFM, until allocation of the resource that is applied for is completed.

It can be learned that in the foregoing steps, the resource that is applied for is allocated by using multiple VNFMs connected to the first VNFM.

According to the network functions virtualization resource processing method described in this aspect, a resource management network is formed between the first VNFM and the second VNFM, so that the VNFMs can perform resource processing such as resource query or resource allocation between each other. A specific processing process does not require participation of an NFVO. Therefore, impact on the network if the NFVO is faulty is avoided, and a distributed resource management manner is implemented. Further, when the NFVO is faulty, the second VNFM can still reserve or allocate the resource that is applied for, effectively improving robustness and efficiency of the network.

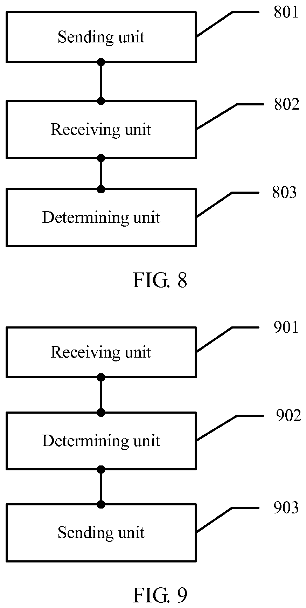

With reference to Aspect 6 shown in FIG. 8, the following describes in detail a specific structure of a virtualized network function manager VNFM provided in this aspect of the present disclosure.

The VNFM described in this aspect is configured to implement the method performed by the first VNFM in FIG. 3 and FIG. 5A and FIG. 5B to FIG. 7A and FIG. 7B.

The VNFM includes:
a sending unit 801, configured to send a first resource request message to a second VNFM, where the first resource request message includes information about a resource for which the VNFM applies for a virtualized network function VNF; and
a receiving unit 802, configured to: when a resource of a target virtualized infrastructure manager VIM connected to the second VNFM meets the information about the resource that is applied for, receive a first feedback message sent by the second VNFM, where the first feedback message includes information about the target VIM that has reserved a resource for or allocated a resource to the VNFM.

The second VNFM described in this aspect is a VNFM connected to the VNFM provided in this aspect.

It should be noted that in this aspect, a specific quantity of the sending units 801 and a specific quantity of the receiving units 802 are not limited. That is, there may be one or more sending units 801, and there may be one or more receiving units 802.

Optionally, as shown in FIG. 8, the VNFM in this aspect further includes a determining unit 803.

When the second VNFM can reserve the resource that is applied for, the determining unit 803 is configured to determine that the first feedback message includes the information about the target VIM that has reserved a resource for the VNFM.

The sending unit 801 is further configured to: when the first feedback message includes the information about the target VIM that has reserved a resource for the VNFM, send a first resource allocation message to the target VIM, where the first resource allocation message is used by the target VIM to allocate the resource that is applied for.

Specifically, the first feedback message received by the receiving unit 802 includes a resource reservation identifier.

Specifically, the first resource allocation message sent by the sending unit 801 includes the resource reservation identifier, and the resource reservation identifier is used to identify the reserved resource.

When the second VNFM can allocate the resource that is applied for, the determining unit 803 is further configured to determine that the first feedback message includes the information about the target VIM that has allocated a resource to the VNFM. The first feedback message further includes any combination of the following information: an identifier of a target virtual machine VM allocated by the target VIM, and location information of the target VM.

The information about the target VIM that is received by the receiving unit 802 includes any combination of the following information: an identifier of the target VIM, and configuration information for establishing a connection to the target VIM.

If a resource of the VIM connected to the second VNFM cannot meet the information about the resource that is applied for, the receiving unit 802 is further configured to: when the resource of the target VIM connected to the second VNFM cannot meet the information about the resource that is applied for, receive a second feedback message sent by the second VNFM.

The second feedback message is used to indicate that the resource of the target VIM connected to the second VNFM cannot meet the information about the resource that is applied for.

Specifically, the second feedback message received by the receiving unit 802 further includes resource information of a remaining resource of the target VIM connected to the second VNFM, and the resource information of the remaining resource includes a resource type of the remaining resource and a resource amount of the remaining resource.

Specifically, the sending unit 801 is further configured to send a second resource request message to the second VNFM, where the second resource request message includes resource information of a reallocation resource, and the remaining resource is used by the target VIM to reserve the reallocation resource for or allocate the reallocation resource to the VNFM.

Specifically, the information about the resource that is applied for that is sent by the sending unit 801 includes a type of the resource that is applied for and an amount of the resource that is applied for.

With reference to Aspect 7 shown in FIG. 9, the following describes in detail a specific structure of a virtualized network function manager VNFM provided in this aspect of the present disclosure.

The VNFM described in this aspect is configured to implement the method performed by the second VNFM in FIG. 4 to FIG. 7A and FIG. 7B.

The VNFM includes:
a receiving unit 901, configured to receive a first resource request message sent by a first VNFM, where the first resource request message includes information about a resource for which the first VNFM applies for a virtualized network function VNF;
a determining unit 902, configured to determine that a resource of a target virtualized infrastructure manager VIM connected to the VNFM meets the information about the resource that is applied for; and
a sending unit 903, configured to: when the resource of the target virtualized infrastructure manager VIM connected to the VNFM meets the information about the resource that is applied for, send a first feedback message to the first VNFM, where the first feedback message includes information about the target VIM that has reserved a resource for or allocated a resource to the first VNFM.

The first VNFM described in this aspect is a VNFM connected to the VNFM provided in this aspect.

It should be noted that, in this aspect, a specific quantity of the receiving units 901, a specific quantity of the determining units 902, and a specific quantity of the sending units 903 are not limited. That is, there may be one or more receiving units 901, there may be one or more determining units 902, and there may be one or more sending units 903.

Specifically, the sending unit 903 is further configured to send a resource reservation message to the target VIM; and
the receiving unit 901 is further configured to receive a resource reservation feedback message sent by the target VIM.

Specifically, the resource reservation message sent by the sending unit 903 includes a resource reservation identifier.

The first feedback message sent by the sending unit 903 includes the resource reservation identifier, and the resource reservation identifier is used to identify the resource reserved by the target VIM, and allocate the resource that is applied for.

Specifically, the sending unit 903 is further configured to send a second resource allocation message to the target VIM; and
the receiving unit 901 is further configured to receive a resource allocation feedback message sent by the target VIM.

Specifically, the first feedback message sent by the sending unit 903 further includes any combination of the following information: an identifier of a target virtual machine VM allocated by the target VIM, and location information of the target VM allocated by the target VIM.

Information about the target VIM that is included in the first feedback message sent by the sending unit 903 includes any combination of the following information: an identifier of the target VIM, or configuration information for establishing a connection to the target VIM.

If the resource of the VIM connected to the VNFM cannot meet the information about the resource that is applied for, the determining unit 902 is further configured to determine that the resource of the target VIM connected to the VNFM cannot meet the information about the resource that is applied for.

The sending unit 903 is configured to: when the resource of the target VIM connected to the VNFM cannot meet the information about the resource that is applied for, send a second feedback message to the first VNFM, where the second feedback message is used to indicate that the resource of the target VIM connected to the VNFM cannot meet the information about the resource that is applied for.

Specifically, the second feedback message sent by the sending unit 903 includes resource information of a remaining resource of the target VIM connected to the VNFM, and the resource information of the remaining resource includes a resource type of the remaining resource and a resource amount of the remaining resource.

Specifically, the receiving unit 901 is further configured to receive a second resource request message sent by the first VNFM, where the second resource request message includes resource information of a reallocation resource, and the remaining resource is used by the target VIM to reserve the reallocation resource for or allocate the reallocation resource to the first VNFM.

Specifically, the information about the resource that is applied for that is received by the receiving unit 901 includes a type of the resource that is applied for and an amount of the resource that is applied for.

It may be clearly understood by persons skilled in the art that, for the purpose of convenient and brief description, for a detailed working process of the foregoing system, apparatus, and unit, refer to a corresponding process in the foregoing method aspects, and details are not described herein again.

The foregoing unit division is merely an example. Limitation is not imposed thereon.

Aspect 8 of the present disclosure provides a virtualized network function manager VNFM. The virtualized network function manager VNFM in this aspect may perform the operations of the first VNFM in the method shown in FIG. 3 and FIG. 5A and FIG. 5B to FIG. 7A and FIG. 7B.

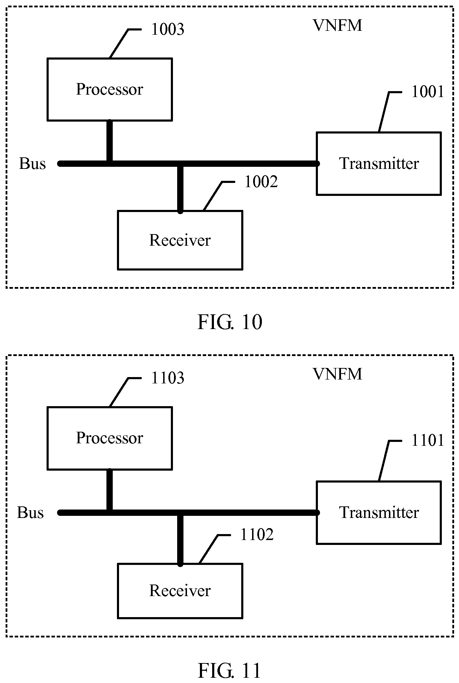

As shown in FIG. 10, the VNFM in this aspect includes a transmitter 1001 and a receiver 1002.

The transmitter 1001 and the receiver 1002 in this aspect are connected by using a bus. Certainly, alternatively, another connection manner may be used. A specific connection manner is not limited in this aspect.

The related VNFM in this aspect of the present disclosure may have more or fewer parts than those shown in FIG. 10, may combine two or more parts, or may have different part configurations or settings. Each part may be implemented in hardware that includes one or more signal processing and/or dedicated integrated circuits, software, or a combination of hardware and software.

The transmitter 1001 is configured to send a first resource request message to a second VNFM, where the first resource request message includes information about a resource for which the VNFM applies for a virtualized network function VNF.

The receiver 1002 is configured to: when a resource of a target virtualized infrastructure manager VIM connected to the second VNFM meets the information about the resource that is applied for, receive a first feedback message sent by the second VNFM, where the first feedback message includes information about the target VIM that has reserved a resource for or allocated a resource to the VNFM.

In this aspect, a specific quantity of the transmitters 1001 and a specific quantity of the receivers 1002 are not limited. That is, there may be one or more transmitters 1001, and there may be one or more receivers 1002.

As shown in FIG. 10, the VNFM further includes a processor 1003.

There may be one or more processors 1003. One processor 1003 is used as an example for description in this aspect.

The transmitter 1001, the receiver 1002, and the processor 1003 in this aspect are connected by using a bus. Certainly, alternatively, another connection manner may be used. A specific connection manner is not limited in this aspect.

The processor 1003 is configured to determine that the first feedback message includes the information about the target VIM that has reserved a resource for the VNFM.

The transmitter 1001 is further configured to: when the first feedback message includes the information about the target VIM that has reserved a resource for the VNFM, send a first resource allocation message to the target VIM, where the first resource allocation message is used by the target VIM to allocate the resource that is applied for.

Optionally, the first feedback message received by the receiver 1002 includes a resource reservation identifier, the first resource allocation message sent by the transmitter 1001 includes the resource reservation identifier, and the resource reservation identifier is used to identify the reserved resource.

Optionally, the processor 1003 is configured to determine that the first feedback message includes the information about the target VIM that has allocated a resource to the VNFM, where the first feedback message further includes any combination of the following information: an identifier of a target virtual machine VM allocated by the target VIM, and location information of the target VM.

Optionally, the information about the target VIM that is received by the receiver 1002 includes any combination of the following information:
an identifier of the target VIM, and configuration information for establishing a connection to the target VIM.

Optionally, the receiver 1002 is further configured to: when the resource of the target VIM connected to the second VNFM cannot meet the information about the resource that is applied for, receive a second feedback message sent by the second VNFM, where
the second feedback message is used to indicate that the resource of the target VIM connected to the second VNFM cannot meet the information about the resource that is applied for.

Optionally, the second feedback message received by the receiver 1002 further includes resource information of a remaining resource of the target VIM connected to the second VNFM, and the resource information of the remaining resource includes a resource type of the remaining resource and a resource amount of the remaining resource.

Optionally, the transmitter 1001 is further configured to send a second resource request message to the second VNFM, where the second resource request message includes resource information of a reallocation resource, and the remaining resource is used by the target VIM to reserve the reallocation resource for or allocate the reallocation resource to the VNFM.

Optionally, the information about the resource that is applied for that is sent by the transmitter 1001 includes a type of the resource that is applied for and an amount of the resource that is applied for.

Optionally, the VNFM in this aspect may further include a memory. The memory stores a computer executable instruction used to instruct the processor 1003 to coordinate with the transmitter 1001 and the receiver 1002 to complete the operations of the first VNFM in the method shown in FIG. 3 and FIG. 5A and FIG. 5B to FIG. 7A and FIG. 7B.

Aspect 9 of the present disclosure provides a virtualized network function manager VNFM. The virtualized network function manager VNFM in this aspect may perform the operations of the second VNFM in the method shown in FIG. 4 to FIG. 7A and FIG. 7B.

As shown in FIG. 11, the VNFM in this aspect includes a transmitter 1101, a receiver 1102, and a processor 1103.

The related VNFM in this aspect of the present disclosure may have more or fewer parts than those shown in FIG. 11, may combine two or more parts, or may have different part configurations or settings. Each part may be implemented in hardware that includes one or more signal processing and/or dedicated integrated circuits, software, or a combination of hardware and software.

There may be one or more transmitters 1101, receivers 1102, and processors 1103.

The transmitter 1101, the receiver 1102, and the processor 1103 in this aspect are connected by using a bus. Certainly, alternatively, another connection manner may be used. A specific connection manner is not limited in this aspect.

The receiver 1102 is configured to receive a first resource request message sent by a first VNFM, where the first resource request message includes information about a resource for which the first VNFM applies for a virtualized network function VNF.

The processor 1103 is configured to determine that a resource of a target virtualized infrastructure manager VIM connected to the VNFM meets the information about the resource that is applied for.

The transmitter 1101 is configured to: when the resource of the target virtualized infrastructure manager VIM connected to the VNFM meets the information about the resource that is applied for, send a first feedback message to the first VNFM, where the first feedback message includes information about the target VIM that has reserved a resource for or allocated a resource to the first VNFM.

Optionally, the transmitter 1101 is further configured to send a resource reservation message to the target VIM; and
the receiver 1102 is further configured to receive a resource reservation feedback message sent by the target VIM.

Optionally, the resource reservation message sent by the transmitter 1101 includes a resource reservation identifier, the first feedback message sent by the transmitter 1101 includes the resource reservation identifier, and the resource reservation identifier is used to identify the resource reserved by the target VIM, and allocate the resource that is applied for.

Optionally, the transmitter 1101 is further configured to send a second resource allocation message to the target VIM.

The receiver 1102 is further configured to receive a resource allocation feedback message sent by the target VIM.

Optionally, the first feedback message sent by the transmitter 1101 further includes any combination of the following information: an identifier of a target virtual machine VM allocated by the target VIM, and location information of the target VM allocated by the target VIM.

Optionally, the information about the target VIM that is included in the first feedback message sent by the transmitter 1101 includes any combination of the following information:
an identifier of the target VIM, and configuration information for establishing a connection to the target VIM.

Optionally, the processor 1103 is further configured to determine that the resource of the target VIM connected to the VNFM cannot meet the information about the resource that is applied for.

The transmitter 1101 is further configured to: when the resource of the target VIM connected to the VNFM cannot meet the information about the resource that is applied for, send a second feedback message to the first VNFM, where the second feedback message is used to indicate that the resource of the target VIM connected to the VNFM cannot meet the information about the resource that is applied for.

Optionally, the second feedback message sent by the transmitter 1101 includes resource information of a remaining resource of the target VIM connected to the VNFM, and the resource information of the remaining resource includes a resource type of the remaining resource and a resource amount of the remaining resource.

Optionally, the receiver 1102 is further configured to receive a second resource request message sent by the first VNFM, where the second resource request message includes resource information of a reallocation resource, and the remaining resource is used by the target VIM to reserve the reallocation resource for or allocate the reallocation resource to the first VNFM.

Optionally, the information about the resource that is applied for that is received by the receiver 1102 includes a type of the resource that is applied for and an amount of the resource that is applied for.

Optionally, the VNFM in this aspect may further include a memory. The memory stores a computer executable instruction used to instruct the processor 1103 to coordinate with the transmitter 1101 and the receiver 1102 to complete the operations of the second VNFM in the method shown in FIG. 4 to FIG. 7A and FIG. 7B.

It may be clearly understood by persons skilled in the art that, for the purpose of convenient and brief description, for a detailed working process of the foregoing system, apparatus, and unit, refer to a corresponding process in the foregoing method aspects, and details are not described herein again.

The foregoing aspects are merely intended for describing the technical solutions of the present disclosure, but not for limiting the present disclosure. Although the present disclosure is described in detail with reference to the foregoing aspects, persons of ordinary skill in the art should understand that they may still make modifications to the technical solutions described in the foregoing aspects or make equivalent replacements to some technical features thereof, without departing from the scope of the technical solutions of the aspects of the present disclosure.

## Claims

1. A network functions virtualization resource processing method, comprising the steps of:
sending (501-503, 701-703), by a first virtualized network function manager, VNFM, a first resource request message to a second VNFM, wherein the first resource request message comprises information about a resource for which the first VNFM applies for a virtualized network function, VNF; and
when a resource of a target virtualized infrastructure manager, VIM, connected to the second VNFM meets the information about the resource that is applied for,
receiving (504-509), by the first VNFM, a first feedback message sent by the second VNFM, wherein the first feedback message comprises information about the target VIM that has reserved a resource for or allocated a resource to the first VNFM, and
when the resource of the target VIM connected to the second VNFM cannot meet the information about the resource that is applied for,
receiving (704-706), by the first VNFM, a second feedback message sent by the second VNFM, wherein the second feedback message is used to indicate that the resource of the target VIM connected to the second VNFM cannot meet the information about the resource that is applied for, and wherein the second feedback message comprises resource information of a remaining resource of the target VIM connected to the second VNFM, and the resource information of the remaining resource comprises a resource type of the remaining resource and a resource amount of the remaining resource;
sending (708-710), by the first VNFM, a second resource request message to the second VNFM, wherein the second resource request message comprises resource information of a reallocation resource, and the remaining resource is used by the target VIM to reserve the reallocation resource for or allocate the reallocation resource to the first VNFM;
receiving (711), by the first VNFM, a third feedback message sent by the second VNFM, wherein, the third feedback message includes information about the target VIM that has reserved or allocated a resource for the reallocation resource; and
requesting (712), by the first VNFM, a resource from another VNFM connected to the first VNFM until allocation of the resource that is applied for is completed.

2. The method according to claim 1, wherein when the first feedback message comprises the information about the target VIM that has reserved a resource for the first VNFM, after the the step of receiving, by the first VNFM, a first feedback message sent by the second VNFM, the method further comprises the step of: sending, by the first VNFM, a first resource allocation message to the target VIM, wherein the first resource allocation message is used by the target VIM to allocate the resource that is applied for.

3. The method according to claim 1, wherein when the first feedback message comprises the information about the target VIM that has allocated a resource to the first VNFM, the first feedback message further comprises any combination of the following information: an identifier of a target virtual machine VM allocated by the target VIM, and location information of the target VM allocated by the target VIM.

4. The method according to any one of claims 1 to 3, wherein the information about the target VIM comprises any combination of the following information:
an identifier of the target VIM, and configuration information for establishing a connection to the target VIM.

5. The method according to any one of claims 1 to 4, wherein the information about the resource that is applied for comprises a type of the resource that is applied for and an amount of the resource that is applied for.

6. A virtualized network function manager, VNFM, comprising:
a transmitter (1001), configured to send a first resource request message to a second, VNFM, wherein the first resource request message comprises information about a resource for which the VNFM applies for a virtualized network function, VNF; and
a receiver (1002), configured to:
when a resource of a target virtualized infrastructure manager, VIM, connected to the second VNFM meets the information about the resource that is applied for,
receive a first feedback message sent by the second VNFM, wherein the first feedback message comprises information about the target VIM that has reserved a resource for or allocated a resource to the VNFM, and
when the resource of the target VIM connected to the second VNFM cannot meet the information about the resource that is applied for, receive a second feedback message sent by the second VNFM, wherein the second feedback message is used to indicate that the resource of the target VIM connected to the second VNFM cannot meet the information about the resource that is applied for, and wherein the second feedback message received by the receiver further comprises resource information of a remaining resource of the target VIM connected to the second VNFM, and the resource information of the remaining resource comprises a resource type of the remaining resource and a resource amount of the remaining resource;
wherein, the transmitter is further configured to:
send a second resource request message to the second VNFM, wherein the second resource request message comprises resource information of a reallocation resource, and the remaining resource is used by the target VIM to reserve the reallocation resource for or allocate the reallocation resource to the VNFM;
wherein, the receiver is further configured to:
receive, by the first VNFM, a third feedback message sent by the second VNFM, wherein, the third feedback message includes information about the target VIM that has reserved or allocated a resource for the reallocation resource; and
wherein, the transmitter is further configured to:
request a resource from another VNFM connected to the VNFM until allocation of the resource that is applied for is completed.

7. The VNFM according to claim 6, wherein the VNFM further comprises a processor (1003), wherein
the processor is configured to determine that the first feedback message comprises the information about the target VIM that has reserved a resource for the VNFM; and
the transmitter (1001) is further configured to: when the first feedback message comprises the information about the target VIM that has reserved a resource for the VNFM, send a first resource allocation message to the target VIM, wherein the first resource allocation message is used by the target VIM to allocate the resource that is applied for.

8. The VNFM according to claim 6, wherein the VNFM further comprises a processor (1003), wherein
the processor is configured to determine that the first feedback message comprises the information about the target VIM that has allocated a resource to the VNFM, wherein the first feedback message further comprises any combination of the following information: an identifier of a target virtual machine VM allocated by the target VIM, and location information of the target VM.

9. The VNFM according to any one of claims 6 to 8, wherein the information about the target VIM that is received by the receiver (1002) comprises any combination of the following information:
an identifier of the target VIM, and configuration information for establishing a connection to the target VIM.

10. The VNFM according to any one of claims 6 to 9, wherein the information about the resource that is applied for that is sent by the transmitter (1001) comprises a type of the resource that is applied for and an amount of the resource that is applied for.

11. A computer readable storage medium storing a program comprising instructions which, when executed by a processor, cause said processor to carry out the method in any one of claims 1 to 5.

## Patentansprüche

1. Verfahren zur Verarbeitung von Netzwerkfunktionvirtualisierungsressourcen, umfassend die Schritte:
Senden (501-503, 701-703) einer ersten Ressourcenanforderungsnachricht durch einen ersten virtualisierten Netzwerkfunktionsmanager, VNFM, zu einem zweiten VNFM, wobei die erste Ressourcenanforderungsnachricht Information über eine Ressource umfasst, für die der erste VNFM eine virtualisierte Netzwerkfunktion, VNF, anfordert; und
wenn eine Ressource eines virtualisierten Ziel-Infrastrukturmanagers, VIM, die mit dem zweiten VNFM verbunden ist, der Information zu der angeforderten Ressource genügt:
Empfangen (504-509) einer ersten von dem zweiten VNFM gesendeten Rückmeldenachricht durch den ersten VNFM, wobei die erste Rückmeldenachricht Information über den Ziel-VIM umfasst, der für den ersten VNFM eine Ressource reserviert oder zugeordnet hat, und
wenn die Ressource des mit dem zweiten VNFM verbundenen Ziel-VIM der Information über die angeforderte Ressource nicht genügen kann:
Empfangen (704-706) einer zweiten von dem zweiten VNFM gesendeten Rückmeldenachricht durch den ersten VNFM, wobei die zweite Rückmeldenachricht verwendet wird, um anzugeben, dass die Ressource des mit dem zweiten VNFM verbundenen Ziel-VIM der Information über die angeforderte Ressource nicht genügen kann, und wobei die zweite Rückmeldenachricht Ressourceninformation einer verbleibenden Ressource des mit dem zweiten VNFM verbundenen Ziel-VIM umfasst und die Ressourceninformation der verbleibenden Ressource einen Ressourcentyp der verbleibenden Ressource und einen Ressourcenumfang der verbleibenden Ressource umfasst;
Senden (708-710) einer zweiten Ressourcenanforderungsnachricht durch den ersten VNFM zu dem zweiten VNFM, wobei die zweite Ressourcenanforderungsnachricht Ressourceninformation einer Neuzuweisungsressource umfasst und die verbleibende Ressource durch den Ziel-VIM verwendet wird, um die Neuzuweisungsressource für den ersten VNFM zu reservieren oder die Neuzuweisungsressource dem ersten VNFM zuzuweisen;
Empfangen (711) einer durch den zweiten VNFM gesendeten dritten Rückmeldenachricht durch den ersten VNFM, wobei die dritte Rückmeldenachricht Information über den Ziel-VIM aufweist, der eine Ressource für die Neuzuweisungsressource reserviert oder zugeordnet hat; und
Anfordern (712) einer Ressource von einem anderen, mit dem ersten VNFM verbundenen VNFM, durch den ersten VNFM, bis die Zuweisung der angefragten Ressource abgeschlossen ist.

2. Verfahren nach Anspruch 1, wobei das Verfahren, wenn die erste Rückmeldenachricht die Information zu dem Ziel-VIM umfasst, der eine Ressource für den ersten VNFM reserviert hat, nach dem Schritt des Empfangens einer durch den zweiten VNFM gesendeten ersten Rückmeldenachricht durch den ersten VNFM ferner den Schritt umfasst:
Senden einer ersten Ressourcenzuweisungsnachricht durch den ersten VNFM zum Ziel-VIM, wobei die erste Ressourcenzuweisungsnachricht durch den Ziel-VIM verwendet wird, um die angefragte Ressource zuzuweisen.

3. Verfahren nach Anspruch 1, wobei, wenn die erste Rückmeldenachricht die Information über den Ziel-VIM umfasst, der eine Ressource dem ersten VNFM zugewiesen hat, die erste Rückmeldenachricht ferner eine beliebige Kombination der folgenden Informationen umfasst: eine Kennung einer durch den Ziel-VIM zugewiesenen virtuellen Ziel-Maschine VM und Positionsinformation der durch den Ziel-VIM zugewiesenen Ziel-VM

4. Verfahren nach einem der Ansprüche 1 bis 3, wobei die Information über den Ziel-VIM eine beliebige Kombination der folgenden Informationen umfasst:
eine Kennung des Ziel-VIM und Einrichtungsinformation zum Erstellen einer Verbindung mit dem Ziel-VIM.

5. Verfahren nach einem der Ansprüche 1 bis 4, wobei die Information über die angefragte Ressource einen Typ der Ressource, die angefragt wird, und einen Umfang der Ressource, die angefragt wird, umfasst.

6. Virtualisierter Netzwerkfunktionsmanager, VNFM, umfassend:
einen Sender (1001), ausgelegt zum Senden einer ersten Ressourcenanforderungsnachricht zu einem zweiten VNFM, wobei die erste Ressourcenanforderungsnachricht Information über eine Ressource umfasst, die der VNFM für eine virtualisierte Netzwerkfunktion, VNF, anfordert; und
einen Empfänger (1002), dafür ausgelegt,
wenn eine Ressource eines virtualisierten Ziel-Infrastrukturmanagers, VIM, die mit dem zweiten VNFM verbunden ist, der Information über die angefragte Ressource genügt,
eine von dem zweiten VNFM gesendete erste Rückmeldenachricht zu empfangen, wobei die erste Rückmeldenachricht Information über den Ziel-VIM umfasst, der eine Ressource für den VNFM reserviert oder dem VNFM eine Ressource zugewiesen hat, und
wenn die Ressource des mit dem zweiten VNFM verbundenen Ziel-VIM der Information über die angeforderte Ressource nicht genügen kann, eine durch den zweiten VNFM gesendete zweite Rückmeldenachricht zu empfangen, wobei die zweite Rückmeldenachricht verwendet wird, um anzugeben, dass die Ressource des mit dem zweiten VNFM verbundenen Ziel-VIM der Information über die angefragte Ressource nicht genügen kann, und wobei die von dem Empfänger empfangene zweite Rückmeldenachricht ferner Ressourceninformation einer verbleibenden, mit dem zweiten VNFM verbundenen Ressource des Ziel-VIM umfasst und die Ressourceninformation der verbleibenden Ressource einen Ressourcentyp der verbleibenden Ressource und einen Ressourcenumfang der verbleibenden Ressource umfasst;
wobei der Sender ferner ausgelegt ist zum
Senden einer zweiten Ressourcenanforderungsnachricht zu dem zweiten VNFM, wobei die zweite Ressourcenanforderungsnachricht Ressourceninformation einer Neuzuweisungsressource umfasst und die verbleibende Ressource durch den Ziel-VIM verwendet wird, um die Neuzuweisungsressource für den VNFM zu reservieren oder die Neuzuweisungsressource dem VNFM zuzuweisen;
wobei der Empfänger ferner ausgelegt ist zum
Empfangen einer von dem zweiten VNFM gesendeten dritten Rückmeldenachricht durch den ersten VNFM, wobei die dritte Rückmeldenachricht Information über den Ziel-VIM aufweist, der eine Ressource für die Neuzuweisungsressource reserviert oder zugewiesen hat; und
wobei der Sender ferner ausgelegt ist zum
Anfordern einer Ressource von einem anderen mit dem VNFM verbundenen VNFM, bis die Zuweisung der angefragten Ressource abgeschlossen ist.

7. VNFM nach Anspruch 6, wobei der VNFM ferner einen Prozessor (1003) umfasst, wobei
der Prozessor dafür ausgelegt ist, festzustellen, dass die erste Rückmeldenachricht die Information über den Ziel-VIM umfasst, der eine Ressource für den VNFM reserviert hat; und
der Sender (1001) ferner dafür ausgelegt ist, wenn die erste Rückmeldenachricht die Information über den Ziel-VIM umfasst, der eine Ressource für den VNFM reserviert hat, eine erste Ressourcenzuweisungsnachricht zum Ziel-VIM zu senden, wobei die erste Ressourcenzuweisungsnachricht vom Ziel-VIM verwendet wird, um die angefragte Ressource zuzuweisen.

8. VNFM nach Anspruch 6, wobei der VNFM ferner einen Prozessor (1003) umfasst, wobei
der Prozessor dafür ausgelegt ist, festzustellen, dass die erste Rückmeldenachricht die Information über den Ziel-VIM umfasst, der eine Ressource für den VNFM reserviert hat, wobei die erste Rückmeldenachricht ferner eine beliebige Kombination der folgenden Informationen umfasst: eine Kennung einer durch den Ziel-VIM zugewiesenen virtuellen Ziel-Maschine VM und Positionsinformation der Ziel-VM

9. VNFM nach einem der Ansprüche 6 bis 8, wobei die Information über den Ziel-VIM, die von dem Empfänger (1002) empfangen wird, eine beliebige Kombination der folgenden Informationen umfasst:
eine Kennung des Ziel-VIM und Einrichtungsinformation zum Erstellen einer Verbindung mit dem Ziel-VIM.

10. VNFM nach einem der Ansprüche 6 bis 9, wobei die Information über die angefragte Ressource, die von dem Sender (1001) gesendet wird, einen Typ der Ressource, die angefragt wird, und einen Umfang der Ressource, die angefragt wird, umfasst.

11. Rechnerlesbares Speichermedium, speichernd ein Programm, umfassend Anweisungen, die bei Ausführung durch einen Prozessor den Prozessor zum Durchführen des Verfahrens nach einem der Ansprüche 1 bis 5 veranlassen.

## Revendications

1. Procédé de traitement de ressources de virtualisation de fonctions d'un réseau, comprenant les étapes consistant à :
envoyer (501-503, 701-703), par un premier gestionnaire de fonction de réseau virtualisé, VNFM (virtualized network function manager), un premier message de demande de ressources à un second VNFM, dans lequel le premier message de demande de ressources comprend des informations sur une ressource pour laquelle le premier VNFM demande une fonction de réseau virtualisé, VNF (virtualized network function) ; et
lorsqu'une ressource d'un gestionnaire d'infrastructure virtualisé cible, VIM (virtualized infrastructure manager), connecté au second VNFM est conforme aux informations concernant la ressource demandée,
recevoir (504-509), par le premier VNFM, un premier message de retour envoyé par le second VNFM, dans lequel le premier message de retour comprend des informations sur le VIM cible qui a réservé une ressource pour le premier VNFM ou alloué une ressource à celui-ci, et
lorsque la ressource du VIM cible connecté au second VNFM n'est pas conforme aux informations concernant la ressource demandée,
recevoir (704-706), par le premier VNFM, un second message de retour envoyé par le second VNFM, dans lequel le second message de retour est utilisé pour indiquer que la ressource du VIM cible connecté au second VNFM n'est pas conforme aux informations concernant la ressource demandée, et dans lequel le second message de retour comprend des informations de ressource d'une ressource restante du VIM cible connecté au second VNFM, et les informations de ressource de la ressource restante comprennent un type de ressource de la ressource restante et une quantité de ressource de la ressource restante ;
envoyer (708-710), par le premier VNFM, un second message de demande de ressource au second VNFM, dans lequel le second message de demande de ressource comprend des informations de ressource d'une ressource de réallocation, et la ressource restante est utilisée par le VIM cible pour réserver la ressource de réallocation pour le premier VNFM ou allouer la ressource de réallocation à celui-ci ;
recevoir (711), par le premier VNFM, un troisième message de retour envoyé par le second VNFM, dans lequel le troisième message de retour comprend des informations sur le VIM cible qui a réservé une ressource ou alloué une ressource pour la ressource de réallocation ; et
demander (712), par le premier VNFM, une ressource d'un autre VNFM connecté au premier VNFM jusqu'à ce que l'allocation de la ressource qui est demandée soit terminée.

2. Procédé selon la revendication 1, dans lequel lorsque le premier message de retour comprend les informations sur le VIM cible qui a réservé une ressource pour le premier VNFM, après l'étape consistant à recevoir, par le premier VNFM, un premier message de retour envoyé par le second VNFM, le procédé comprend en outre l'étape consistant à :
envoyer, par le premier VNFM, un premier message d'allocation de ressource au VIM cible, dans lequel le premier message d'allocation de ressources est utilisé par le VIM cible pour allouer la ressource qui est demandée.

3. Procédé selon la revendication 1, dans lequel lorsque le premier message de retour comprend des informations sur le VIM cible qui a alloué une ressource au premier VNFM, le premier message de retour comprend en outre une combinaison quelconque des informations suivantes : un identifiant d'une machine virtuelle cible VM (virtual machine) allouée par le VIM cible, et des informations d'emplacement de la VM cible allouée par le VIM cible.

4. Procédé selon l'une quelconque des revendications 1 à 3, dans lequel les informations concernant le VIM cible comprennent une combinaison quelconque des informations suivantes :
un identifiant du VIM cible et des informations de configuration pour établir une connexion avec le VIM cible.

5. Procédé selon l'une quelconque des revendications 1 à 4, dans lequel les informations concernant la ressource demandée comprennent un type de la ressource demandée et une quantité de la ressource demandée.

6. Gestionnaire de fonction de réseau virtualisé, VNFM, comprenant :
un émetteur (1001), configuré pour envoyer un premier message de demande de ressource à un second VNFM, dans lequel le premier message de demande de ressource comprend des informations sur une ressource demandée par le VNFM pour une fonction de réseau virtualisé, VNF ; et
un récepteur (1002) configuré pour :
lorsqu'une ressource d'un gestionnaire d'infrastructure virtualisé cible, VIM, connecté au second VNFM est conforme aux informations concernant la ressource demandée, recevoir un premier message de retour envoyé par le second VNFM, dans lequel le premier message de retour comprend des informations sur le VIM cible qui a réservé une ressource pour le VNFM ou alloué une ressource à celui-ci, et
lorsque la ressource du VIM cible connecté au second VNFM n'est pas conforme aux informations concernant la ressource demandée, recevoir un second message de retour envoyé par le second VNFM, dans lequel le second message de retour est utilisé pour indiquer que la ressource du VIM cible connecté au second VNFM n'est pas conforme aux informations concernant la ressource demandée, et dans lequel le second message de retour reçu par le récepteur comprend en outre des informations de ressource d'une ressource restante du VIM cible connecté au second VNFM, et les informations de ressource de la ressource restante comprennent un type de ressource de la ressource restante et une quantité de ressource de la ressource restante ;
dans lequel l'émetteur est en outre configuré pour :
envoyer un second message de demande de ressource au second VNFM, dans lequel le second message de demande de ressource comprend des informations de ressource d'une ressource de réallocation, et la ressource restante est utilisée par le VIM cible pour réserver la ressource de réallocation pour le VNFM ou allouer la ressource de réallocation à celui-ci ;
dans lequel le récepteur est en outre configuré pour :
recevoir, par le premier VNFM, un troisième message de retour envoyé par le second VNFM, dans lequel le troisième message de retour comprend des informations sur le VIM cible qui a réservé ou alloué une ressource pour la ressource de réallocation ; et
dans lequel l'émetteur est en outre configuré pour :
demander une ressource d'un autre VNFM connecté au VNFM jusqu'à ce que l'allocation de la ressource qui est demandée soit terminée.

7. VNFM selon la revendication 6, dans lequel le VNFM comprend en outre un processeur (1003), dans lequel
le processeur est configuré pour déterminer que le premier message de retour comprend des informations sur le VIM cible qui a réservé une ressource pour le VNFM ; et
l'émetteur (1001) est en outre configuré pour : lorsque le premier message de retour comprend les informations sur le VIM cible qui a réservé une ressource pour le VNFM, envoyer un premier message d'allocation de ressource au VIM cible, dans lequel le premier message d'allocation de ressources est utilisé par le VIM cible pour allouer la ressource qui est demandée.

8. VNFM selon la revendication 6, dans lequel le VNFM comprend en outre un processeur (1003), dans lequel
le processeur est configuré pour déterminer que le premier message de retour comprend les informations sur le VIM cible qui a alloué une ressource pour le VNFM, dans lequel le premier message de retour comprend en outre une combinaison quelconque des informations suivantes : un identifiant d'une machine virtuelle cible VM allouée par le VIM cible, et des informations d'emplacement de la VM cible.

9. VNFM selon l'une quelconque des revendications 6 à 8, dans lequel les informations concernant le VIM cible qui sont reçues par le récepteur (1002) comprennent une combinaison quelconque des informations suivantes :
un identifiant du VIM cible et des informations de configuration pour établir une connexion avec le VIM cible.

10. VNFM selon l'une quelconque des revendications 6 à 9, dans lequel les informations concernant la ressource demandée qui sont envoyées par l'émetteur (1001) comprennent un type de la ressource demandée et une quantité de la ressource demandée.

11. Support de mémoire lisible par un ordinateur, contenant un programme comprenant des instructions qui, lorsqu'elles sont exécutées par un processeur, amènent ledit processeur à mettre en œuvre le procédé selon l'une quelconque des revendications 1 à 5.
